# EUROPÄISCHE PATENTANMELDUNG

(11) **EP 1 962 171 A2**
(43) Veröffentlichungstag der Anmeldung: **27.08.2008**
(21) Anmeldenummer: 07119291.8
(22) Anmeldetag: 25.10.2007
(51) Int. Cl.: G06F 1/32

(54) **Pocket-PC mit Gerätesperre**

(30) Priorität: 20.02.2007 DE 102007008206; 01.03.2007 DE 102007010043
(71) Anmelder: Fujitsu Siemens Computers GmbH, 80807 München (DE)
(72) Erfinder: Filimon, Diana, 86368, Gersthofen (DE); Fuhrmann, Udo, 86438, Kissing (DE); Stefan, Heiss, 86399, Bobingen (DE)
(74) Vertreter: Epping - Hermann - Fischer

(57) **Zusammenfassung**

Die Erfindung betrifft einen Pocket-PC (1) mit einer Tastatur (9), einer Power-ON/OFF Taste (2), Anwendungstasten (3, 7, 8, 10) und einer Gerätesperre, die im aktivierten Zustand eine Eingabe über die Tastatur (9) und die Anwendungstasten (3, 7, 8, 10) verhindert, wobei der Pocket-PC (1) in einem Energiesparzustand betreibbar ist. Der Pocket-PC (1) ist erfindungsgemäß dadurch gekennzeichnet, dass der Pocket-PC (1) bei aktivierter Gerätesperre im Energiesparzustand verbleibt, wenn eine Eingabe über die Tastatur (9) oder die Anwendungstasten (3, 7, 8, 10) erfolgt.

## Beschreibung

Die Erfindung betrifft einen Pocket-PC mit einer Tastatur, einer Power-ON/OFF Taste, Anwendungstasten und einer Gerätesperre, die im aktivierten Zustand eine Eingabe über die Tastatur und die Anwendungstasten verhindert, und welcher einen Energiesparzustand einnehmen kann.

Der Pocket-PC kann ein tragbarer Computer, ein Handheld, ein Smartphone oder ein tragbares computerbasiertes Gerät sein. Ein Pocket-PC ist meist mit einem Microsoft Windows Mobile Betriebssystem ausgestattet.

Tragbare Geräte wie beispielsweise ein Pocket-PC weisen meist mehrere Tasten und einen Eingabebildschirm auf. Wird ein Pocket-PC beispielsweise in einer Tasche transportiert ist es möglich, dass auf unterschiedliche Arten ohne beabsichtigte Einwirkung eines Benutzers Eingaben ausgeführt werden, beispielsweise kann durch eine irrtümliche Betätigung einer der Tasten ein Anruf getätigt werden.

Tragbare Geräte mit einem Microsoft Windows Mobile Betriebssystem sehen eine Tastensperre vor. Der Benutzer aktiviert die Tastensperre über eine Taste oder über ein Symbol auf dem Eingabebildschirm. Dieses Aktivieren muss beispielsweise beim Ausschalten des Geräts erfolgen. Ist die Tastensperre nicht explizit aktiviert, kann das Gerät durch irrtümliche Betätigung von beispielsweise der Tastatur unbeabsichtigte Eingaben ausführen. Ist das Gerät in einem Zustand mit verringertem Energieverbrauch und es erfolgt eine Benachrichtigung, beispielsweise eine Erinnerung an einen Termin, wird diese auf dem Eingabebildschirm angezeigt. Das Gerät geht aus dem Energiesparzustand in einen normalen Betriebszustand über. Befindet sich das Gerät in der Tasche und ist die Tastensperre nicht explizit aktiviert worden kann das Lesen der Benachrichtigung irrtümlicherweise ohne das Wissen des Benutzers bestätigt werden. Auch wenn die Tastensperre aktiviert ist, bewirkt jede unbeabsichtigte Betätigung beispielsweise von Anwendungstasten einen Wechsel vom Energiesparzustand in den normalen Betriebszustand, was unnötig Energie verbraucht. Mit Anwendungstasten sind diejenigen Tasten des Pocket-PC bezeichnet, die mit bestimmten Funktionen oder Applikationen belegt sind. Beispielsweise sind das die Tasten für den Aufruf eines Kalenders, eines Mailprogramms, einer Kamera, einer audiovisuellen Aufnahme und die grüne sowie die rote Taste zum Annehmen und Beenden von Telefonaten.
Die Aufgabe der Erfindung ist einen Pocket-PC mit einer Gerätesperre so weiterzubilden, dass die Betriebszeit mit Akku erhöht wird.

Die Aufgabe wird von einem Pocket-PC mit einer Tastatur, einer Power-ON/OFF Taste, Anwendungstasten und einer Gerätesperre, die im aktivierten Zustand eine Eingabe über die Tastatur und die Anwendungstasten verhindert, und
welcher einen Energiesparzustand einnehmen kann, gelöst. Der Pocket-PC ist dadurch gekennzeichnet, dass der Pocket-PC bei aktivierter Gerätesperre im Energiesparzustand verbleibt, wenn eine Eingabe über die Tastatur oder die Anwendungstasten erfolgt.

Der Vorteil der Erfindung ist, dass die Gerätesperre im Pocket-PC zum Einen automatisch aktiv ist und zum Anderen der Pocket-PC im Energiesparzustand verbleibt, wenn die Tastatur oder die Anwendungstasten betätigt werden. Die aktivierte Gerätesperre verhindert somit unbeabsichtigte Eingaben unabhängig vom Betriebszustand des Pocket-PC. Das hat den Vorteil, dass der Pocket-PC, der sich beispielsweise in einer Tasche eines Benutzers befindet, eine irrtümliche Betätigung der Tastatur oder des Eingabebildschirms unterbindet.

Gemäß der Erfindung verbleibt der Pocket-PC im Energiesparzustand bei der Betätigung der Tastatur oder der Anwendungstasten während des Energiesparzustandes. Der Pocket-PC wird nicht irrtümlich in den normalen Betriebszustand versetzt und verbraucht somit auch nicht unnötigerweise Energie.

Die Gerätesperre ist im Pocket-PC so ausgebildet, dass sie beispielsweise nach einer bestimmten Zeit, in der keine Eingabe über die Tastatur oder den Eingabebildschirm erfolgt, automatisch aktiv ist. Es ist auch möglich, die Gerätesperre manuell zu aktivieren oder wenn der Pocket-PC beispielsweise in einen Energiesparzustand wechselt oder geschalten wird. Möchte der Benutzer den Pocket-PC bedienen, muss die Gerätesperre vom Benutzer aufgehoben werden.

Der Pocket-PC ist beispielsweise dazu ausgebildet den Energiesparzustand nach einer vorbestimmten Zeit einzunehmen, wenn keine Benachrichtigungen wie Erinnerungen, SMS, Anrufe, keine Eingaben über die Tastatur oder den Eingabebildschirm erfolgen, oder auf dem Pocket-PC keine Anwendungssoftware wie ein Abspielen einer Musikdatei ausgeführt wird. Es ist auch möglich den Pocket-PC über eine Taste der Tastatur oder über ein Symbol auf dem Eingabebildschirm manuell in den Energiesparzustand zu versetzen. Im Energiesparzustand erfolgt auf dem Eingabebildschirm beispielsweise keine Anzeige.

Die Gerätesperre umfasst die Microsoft Windows Mobile Tastensperre für den Pocket-PC, wodurch im laufenden Betrieb der Pocket-PC gesperrt ist, also Eingaben nicht möglich sind. Ist der Pocket-PC im Energiesparzustand bleibt der Pocket-PC durch die Gerätesperre beim Betätigen der Tastatur oder der Anwendungstasten des Pocket-PCs im Energiesparzustand, sodass keine Anzeige auf dem Eingabebildschirm erfolgt und der Übergang des Pocket-PCs in einen normalen Betriebszustand verhindert ist. Die Gerätesperre bleibt aktiv.

In einer weiteren vorteilhaften Ausführungsform weist der Pocket-PC ein Telekommunikationsmodul und Anwendungstasten zum Abnehmen und Auflegen eines Anrufs auf. Die Gerätesperre bleibt in dieser Ausführungsform auch bei einem eingehenden Anruf für die Tastatur und den Eingabebildschirm und die anderen Anwendungstasten aktiv. Es ist dadurch trotzdem möglich, einen eingehenden Anruf durch Drücken von beispielsweise einer der Anwendungstasten zum Abnehmen und Auflegen eines Anrufs oder einer Tastenkombination dieser Anwendungstasten entgegenzunehmen.

In einer weiteren vorteilhaften Ausführungsform ist die Gerätesperre durch Drücken der Power-ON/OFF Taste und darauf folgendes langes Drücken einer bestimmten weiteren Taste, wie der Enter-Taste deaktivierbar. Ein Aufheben der Gerätesperre durch zufälliges Drücken der genannten Tasten in der genannten Tastenkombination ist extrem unwahrscheinlich. Erst ein langes Drücken der Enter-Taste in einem vorbestimmten Zeitraum nach dem Drücken der Power-ON/OFF Taste bewirkt ein Deaktivieren der Gerätesperre.

Die Erfindung wird nachfolgend anhand von Ausführungsbeispielen näher erläutert. Es zeigen:
- Figur 1: einen Pocket-PC und
- Figur 2: ein Ablaufdiagramm für einen Betrieb des Pocket-PC beim Eingang einer irrtümlichen Eingabe.

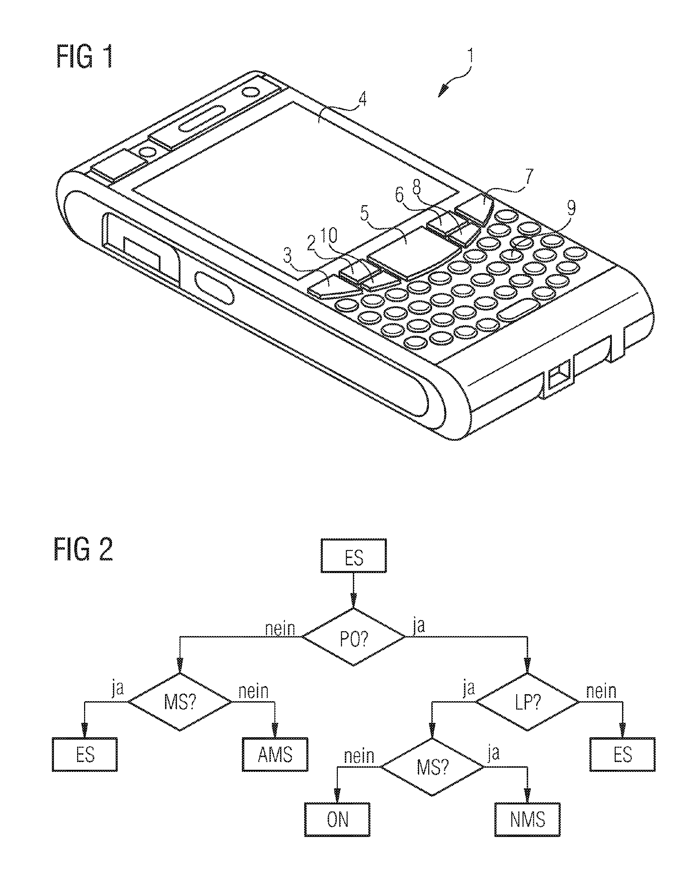

Im ersten Ausführungsbeispiel gemäß Figur 1 weist ein Pocket-PC 1, beispielsweise ein T800 Pocket Loox von Fujitsu Siemens Computers, eine Power ON/OFF Taste 2, einen Eingabebildschirm 4, eine Navigationstaste 5, eine Enter-Taste 6, eine Tastatur 9 und als Anwendungstasten eine Abnehm-Taste 3, eine Aufleg-Taste 7 und Applikationstasten 8, 10 auf. Der Pocket-PC 1 ist mit einem Microsoft Windows Mobile Betriebssystem ausgestattet.

Der Pocket-PC 1 wird in diesem Ausführungsbeispiel durch das Drücken der Power ON/OFF Taste 2 eingeschaltet. Auf dem Eingabebildschirm 4 werden verschiedene Menüs wie das eines Terminkalenders, einer Tabellenkalkulation oder zum Anzeigen oder Abspielen verschiedener Medien angezeigt. Durch Eingaben über die Navigationstaste 5, die Tastatur 9 oder die Applikationstasten 8, 10 ist es möglich, durch die Menüs zu navigieren und Eingaben zu machen. Ein nicht gezeigter Eingabestift, auch Stylus genannt, oder ein spitzer Gegenstand ermöglicht Eingaben über den Eingabebildschirm 4.

Die Power ON/OFF Taste 2 ist in diesem Ausführungsbeispiel eine Doppelfunktions-Taste. Das heißt, sie kann auch mit anderen Funktionen belegt werden. Es ist auch möglich, die Applikationstasten 8, 10 sowie die Enter-Taste 6 mit weiteren Funktionen zu versehen.

Befindet sich der Pocket-PC 1 in einer Tasche eines Benutzers und weist der Pocket-PC 1 eine Gerätesperre auf, bleibt die Gerätesperre aktiv, wenn Tasten des Pocket-PCs 1 gedrückt werden. In diesem Ausführungsbeispiel überprüft der Pocket-PC 1 dann, ob eine bestimmte Tastenkombination erfolgt ist. Ist dies nicht der Fall, bleibt die Gerätesperre aktiv.

Nimmt ein Benutzer den Pocket-PC 1 in Betrieb, also aus der Tasche heraus, deaktiviert der Benutzer die Gerätesperre, indem er die Power ON/OFF Taste 2 gefolgt von der Enter-Taste 6 drückt, wobei die Enter-Taste 6 lange gedrückt werden muss. Diese Tastenkombination muss in einem vorbestimmten Zeitraum erfolgen. Ein zufälliges Deaktivieren der Gerätesperre durch Drücken auf Tasten der Tastatur 9 oder ein zufälliges Drücken der Power ON/OFF Taste 2 oder der Enter-Taste 6 ist somit extrem unwahrscheinlich und damit praktisch unterbunden.

Befindet sich der Pocket-PC 1 in der Tasche des Benutzers und die Gerätesperre ist aktiv, bleibt die Gerätesperre trotz einer Benachrichtigung, beispielsweise eine Erinnerung aus dem Terminkalender aktiv. Dadurch kann auch keine irrtümliche Eingabe, wie die Bestätigung des Termins oder ein weiterleitender Anruf, der beispielsweise im Termin einprogrammiert ist, getätigt werden.

Befindet sich der Pocket-PC 1 in der Tasche in einem Energiesparzustand mit aktiver Gerätesperre, bleibt der Pocket-PC 1 in diesem Engergiesparzustand bis der Benutzer die Gerätesperre durch das Drücken der Power ON/OFF Taste 2 gefolgt von einem langen Drücken der Enter-Taste 6 deaktiviert.

Auf der Rückseite des Pocket-PC 1 befindet sich in diesem Ausführungsbeispiel ein Telekommunikationsmodul. Empfängt der Pocket-PC über das Telekommunikationsmodul einen Anruf, wird der Anruf dem Benutzer akustisch mitgeteilt. Es ist möglich auf dem Eingabebildschirm 4 Informationen über den eingehenden Anruf anzuzeigen, beispielsweise die Telefonnummer des Anrufs. Der Anruf wird über die Abnehm-Taste 3 entgegengenommen, wobei die Tastatur 9 und der Eingabebildschirm 4 für Eingaben gesperrt ist. Das Gespräch wird mit einem Drücken der Aufleg-Taste 7 beendet. Beim Drücken der Aufleg-Taste 7, nimmt der Pocket-PC 1 wieder den Betriebszustand wie vor dem Eingang des Anrufs ein.

Der Pocket-PC 1 ist so ausgebildet, dass beim Drücken der Power ON/OFF Taste 2 gefolgt von dem langen Drücken der Enter-Taste 6 überprüft wird, ob eine Tastensperre aktiviert ist und diese, sofern sie aktiv ist, deaktiviert wird.

Der erfindungsgemäße Pocket-PC 1 weist eine einheitliche und kundenfreundliche Bedienung auf. Irrtümliche unbeabsichtigte Eingaben in den Pocket-PC werden besser unterbunden als beim Stand der Technik.

Das hier beschriebene tragbare Gerät, nämlich der Pocket-PC 1 kann beispielsweise auch ein so genanntes Smartphone sein.

In Figur 2 ist ein Ablaufdiagramm für einen Betrieb des Pocket-PC 1 beim Eingang einer irrtümlichen Eingabe oder einer Benachrichtigung gezeigt.

Der Pocket-PC 1 befindet sich in diesem Ausführungsbeispiel in einem Energiesparzustand ES. Beim Empfang einer Eingabe erfolgt eine Überprüfung PO, ob die Power ON/OFF Taste 2 gedrückt wurde. Ist dies der Fall, wird geprüft, ob in einer vorbestimmten Zeit nach dem Drücken der Power ON/OFF Taste 2 ein langes Drücken LP der Enter-Taste 6 erfolgt. Ist kein langes Drücken LP der Enter-Taste 6 vorhanden, bleibt der Pocket-PC 1 im Energiesparzustand ES. Liegt ein langes Drücken LP der Enter-Taste 6 vor, wird überprüft, ob eine Tastensperre MS aktiv ist. Sofern diese aktiv ist, erfolgt eine Deaktivierung NMS der Tastensperre MS, wobei die für die Deaktivierung NMS notwendigen Tasten simuliert und als Steuerbefehl an das Betriebsystem des Pocket-PC 1 weitergeleitet werden. Die Gerätesperre des Pocket-PC 1 ist somit deaktiviert und der Pocket-PC 1 ist in einem normalen Betriebszustand ON, wird also von einem Benutzer verwendet.

Wird bei der Überprüfung PO in diesem Ausführungsbeispiel festgestellt, dass nicht die Power ON/OFF Taste 2 sondern eine Anwendungstaste gedrückt wurde, bleibt der Pocket-PC 1 im Energiesparzustand ES. Die Gerätesperre ist aktiv.

Wird bei der Überprüfung PO festgestellt, dass eine Benachrichtigung vorliegt, wird überprüft, ob die Tastensperre MS aktiv ist. Ist die Tastensperre MS nicht aktiv, erfolgt deren Aktivierung AMS, wobei die für die Aktivierung AMS notwendigen Tasten simuliert und als Steuerbefehl an das Betriebssystem des Pocket-PC 1 weitergeleitet werden. Der Pocket-PC 1 ist in einem normalen Betriebszustand. Die Gerätesperre des Pocket-PC 1 ist aktiv. Irrtümliche Eingaben sind nicht möglich.

Die Benachrichtigung, beispielsweise ein Alarm oder eine Erinnerung wird in diesem Ausführungsbeispiel nicht auf dem Eingabebildschirm 4 angezeigt, sondern es erfolgt beispielsweise eine akustische Meldung für den Benutzer.

Der Pocket-PC 1, welcher sich im Energiesparzustand ES befindet, wechselt den Betriebszustand, wenn bei nicht aktivierter Tastensperre MS eine Eingabe erfolgt.

Weiterhin wechselt der Pocket-PC 1, welcher sich im Energiesparzustand befindet, den Betriebszustand, wenn die Tastensperre MS deaktiviert wird.

Weitere Ausführungsbeispiele der Erfindung werden hier nicht weiter erläutert, sind aber von der Erfindung umfasst.

### Bezugszeichenliste

- 1: Pocket-PC
- 2: Power On/OFF Taste
- 3: Abnehm-Taste
- 4: Eingabebildschirm
- 5: Navigationstaste
- 6: Enter-Taste
- 7: Aufleg-Taste
- 8: Applikationstaste
- 9: Tastatur
- 10: Applikationstaste

- ES: Energiesparzustand
- PO: Überprüfung Power ON/OFF Taste
- LP: Langes Drücken
- MS: Tastensperre
- NMS: Deaktivieren der Tastensperre
- AMS: Aktivieren der Tastensperre
- ON: ON-Zustand

## Patentansprüche

1. Pocket-PC (1) mit einer Tastatur (9), einer Power-ON/OFF Taste (2),Anwendungstasten (3, 7, 8, 10) undeiner Gerätesperre, die im aktivierten Zustand eine Eingabe über die Tastatur (9) und die Anwendungstasten (3, 7, 8, 10) verhindert, und welcher einen Energiesparzustand einnehmen kann,
**dadurch gekennzeichnet, dass**
der Pocket-PC (1) bei aktivierter Gerätesperre im Energiesparzustand verbleibt, wenn eine Eingabe über die Tastatur (9) oder die Anwendungstasten (3, 7, 8, 10) erfolgt.

2. Pocket-PC (1) nach Anspruch 1,
**dadurch gekennzeichnet, dass**
der Pocket-PC (1) ein Telekommunikationsmodul und eine Taste (3, 7) zum Abnehmen und Auflegen eines Anrufs aufweist und die Gerätesperre auch bei einem eingehenden Anruf für die Tastatur (9) und den Eingabebildschirm (4) aktiviert bleibt.

3. Pocket-PC (1) nach Anspruch 1,
**dadurch gekennzeichnet, dass**
die Gerätesperre durch Drücken der Power-ON/OFF Taste (2) und darauf folgendes langes Drücken (LP) einer bestimmten weiteren Taste, wie der Enter-Taste (6) deaktivierbar ist.

4. Pocket-PC (1) nach Anspruch 1,
**dadurch gekennzeichnet, dass**
der Pocket-PC (1) der sich im Energiesparzustand (ES) befindet, beim Eingang einer Nachricht oder eines Anrufs oder einer sonstigen Benachrichtigung den Betriebszustand wechselt und dabei die Tastensperre aktiviert, sofern sie noch nicht aktiv ist.
